# FASCICULE DE BREVET EUROPEEN

(11) **EP 1 349 078 B1**
(45) Date de publication et mention de la délivrance du brevet: **14.06.2006**
(21) Numéro de dépôt: 03100702.4
(22) Date de dépôt: 19.03.2003
(51) Int. Cl.: G06F 13/40

(54) **Installation, passerelle et procédé de téléchargement d'informations entre des équipements embarqués sur un aéronef et des moyens de chargement non-embarqués**
Einrichtung, Gateway und Verfahren zum Laden von Information zwischen on-board Ausrüstungen eines Flugzeugs und off-board Ladeeinrichtung
Installation, gateway and method for loading information between on-board equipments on an aeroplane and off-board loading means

(30) Priorité: 25.03.2002 FR 0203689
(43) Date de publication de la demande: 01.10.2003
(73) Titulaire: AIRBUS France, 31060 Toulouse (FR)
(72) Inventeur: Saint Etienne, Jean-François, 31270, Cugnaux (FR); Terme, Jean-Louis, 31830, Plaisance du Touch (FR)
(74) Mandataire: Poulin, Gérard

(56) Documents cités:
- EP-A- 0 807 888
- WO-A-01/86836

## Description

### DOMAINE TECHNIQUE

La présente invention se rapporte au domaine des installations de téléchargement/télédéchargement d'informations entre au moins un équipement embarqué sur un aéronef et des moyens de chargement/déchargement d'informations non-embarqués.

L'invention concerne également des passerelles de téléchargement/télédéchargement d'informations susceptibles d'être utilisées dans de telles installations, ainsi que des procédés de téléchargement/télédéchargement d'informations aptes à être mis en oeuvre par ces installations.

Plus particulièrement, le domaine technique de l'invention est relatif à celui du téléchargement/télédéchargement d'informations entre au moins un équipement embarqué communiquant par l'intermédiaire d'un bus de communication de premier type A selon un premier protocole P et comprenant au moins une entrée de réception d'un signal de validation de téléchargement/télédéchargement, et des moyens de chargement/déchargement d'informations non-embarqués, communiquant par l'intermédiaire d'un bus de communication de second type B selon un second protocole Q.

### ETAT DE LA TECHNIQUE ANTERIEURE

De manière générale, les aéronefs comportent une pluralité d'équipements et de calculateurs embarqués, dont certains d'entre eux sont reliés par l'intermédiaire de bus de communication, afin d'être en mesure d'échanger diverses informations.

Une grande majorité des aéronefs en service actuellement utilise des bus de communication au standard ARINC 429 (« ARINC » signifiant en anglais « Aeronautical Radio Inc. »). Ces bus de communication spécifiques sont basés sur des liaisons unidirectionnelles, d'un seul équipement émetteur vers un ou plusieurs équipements récepteurs.

Cependant, en raison du nombre croissant d'équipements implantés sur les aéronefs, il s'est avéré que l'emploi de ce type de bus de communication conduisait à de multiples inconvénients. Parmi eux, on compte par exemple une augmentation de la masse totale au détriment de la charge transportée, un encombrement grandissant, ou encore une probabilité de panne croissante, découlant directement du nombre important de liaisons existantes.

Pour faire face à ces problèmes, un nouveau type de bus de communication a été mis au point, et est en cours de standardisation sous l'appellation ARINC 664.

Ce nouveau genre de bus de communication est basé sur l'emploi de liaisons du type Ethernet (réseau local), et est utilisé pour connecter une grande partie des équipements qui ont été conçus récemment.

Ainsi, il est fréquent que des aéronefs de conception récente soient munis d'équipements embarqués conformes à des standards distincts, les équipements les plus anciens fonctionnant au standard ARINC 429, et les équipements les plus récents fonctionnant au standard Ethernet.

Pareillement, certains aéronefs de conception plus ancienne, comprenant exclusivement des équipements communiquant selon le standard ARINC 429, peuvent également être amenés à subir des changements et/ou des adjonctions d'équipements à leur bord. Les nouveaux équipements installés peuvent alors être de tout type, provoquant ainsi une diversité des standards des équipements embarqués sur les aéronefs, et par conséquent, des difficultés de raccordement entre ces différents équipements.

Notons à cet égard que le problème afférant à la diversité des standards a été partiellement résolu dans le document US-A-5 805 828, dans lequel il a été proposé une installation pour aéronef permettant la communication d'informations entre divers équipements embarqués, certains communiquant au moyen d'un bus au standard ARINC 429 et les autres au moyen d'un bus au standard ARINC 629.

Cependant, l'existence d'équipements communiquant par l'intermédiaire de bus de communication de différents types entraîne un second problème, distinct du premier problème soulevé ci-dessus, exclusivement relatif au raccordement entre des équipements de différents types, placés au sein d'un même aéronef.

En effet, outre la nécessité existante de communication d'informations entre ces différents équipements embarqués, au moins une partie de ces équipements est également susceptible d'être connectée à des moyens de chargement et/ou de déchargement d'informations non-embarqués sur l'aéronef, ces moyens étant plus connus sous l'appellation de « terminal de chargement ».

Le terminal de chargement a pour principale fonction d'autoriser un téléchargement et/ou un télédéchargement d'informations du type données ou programmes, vers et/ou depuis les différents équipements embarqués.

En ce qui concerne les équipements communiquant par l'intermédiaire d'un bus de communication au standard ARINC 429, ils comportent chacun au moins une entrée apte à recevoir un signal de validation de téléchargement/télédéchargement d'informations, ces signaux étant contrôlés par un terminal de chargement approprié auxquels les équipements sont raccordés. Notons que ces signaux sont activés par le terminal de chargement pendant chaque téléchargement ou télédéchargement d'informations effectué entre le terminal et l'équipement embarqué concerné.

En revanche, les équipements communiquant par l'intermédiaire d'un bus conforme au standard Ethernet ne comprennent pas d'entrées destinées à recevoir des signaux de validation, mais utilisent des liaisons Ethernet traditionnelles du type bidirectionnelles, afin de communiquer avec un terminal de chargement approprié.

D'après ce qui vient d'être décrit, on constate que le second problème mentionné ci-dessus est lié à la possibilité de se trouver dans des cas où l'on est amené à effectuer un téléchargement/télédéchargement d'informations vers et/ou depuis un équipement communiquant par l'intermédiaire d'un bus au standard ARINC 429, alors que le seul terminal de chargement disponible est un terminal communiquant par l'intermédiaire d'un bus de communication au standard Ethernet, destiné au téléchargement d'équipements fonctionnant au même standard. A ce titre, on peut préciser que l'incompatibilité des standards des deux entités conduit inévitablement à une impossibilité d'effectuer le téléchargement/télédéchargement d'informations vers et/ou depuis l'équipement embarqué concerné.

Pour résoudre ce problème d'incompatibilité entre des équipements embarqués sur un aéronef et un terminal de chargement situé au sol, plusieurs réalisations ont déjà été proposées dans l'art antérieur.

Parmi ces réalisations, on note en premier lieu la simple juxtaposition de deux terminaux de chargement. Dans un tel cas, le premier terminal est susceptible d'une part d'être raccordé à des équipements communiquant par l'intermédiaire d'un bus de communication au standard ARINC 429, et d'autre part de piloter au moins un signal de validation de ces équipements. Le second terminal de chargement est quant à lui susceptible d'être raccordé à des équipements communiquant par l'intermédiaire d'un bus de communication du type Ethernet.

Cette solution proposée reste néanmoins très contraignante, dans la mesure où la masse totale et l'encombrement du système sont fortement augmentés, en raison de la nécessité de la présence d'un second terminal de chargement. De plus, un autre inconvénient provient de la disparité des interfaces homme/machine relatives à ces deux types de terminaux de chargement utilisés, ce qui entraîne par conséquent des frais importants de formation du personnel confronté à cette dualité.

En second lieu, une autre réalisation a également été proposée, consistant à utiliser un seul terminal de chargement, apte à communiquer d'une part au moyen d'un bus de communication du type ARINC 429, et d'autre part au moyen d'un bus de communication du type Ethernet.

La solution proposée présente cependant un inconvénient majeur, relatif à la caractéristique spécifique du terminal de chargement, du fait qu'il dispose de deux interfaces de communication distinctes. Or pour des raisons de disponibilité lors des escales de l'aéronef, il est grandement préférable de pouvoir utiliser un terminal de chargement standard, et non un terminal de chargement spécifique.

### EXPOSÉ DE L'INVENTION

L'invention a donc tout d'abord pour but de proposer une installation de téléchargement/télédéchargement d'informations entre au moins un équipement embarqué sur un aéronef et des moyens de chargement/déchargement d'informations non-embarqués, au moins un équipement embarqué communiquant par l'intermédiaire d'un bus de communication de premier type A selon un premier protocole P et comprenant au moins une entrée de réception d'un signal de validation de téléchargement/télédéchargement, les moyens de chargement/déchargement d'informations communiquant par l'intermédiaire d'un bus de communication de second type B selon un second protocole Q, cette installation remédiant au moins partiellement aux inconvénients relatifs aux réalisations de l'art antérieur cités ci-dessus.

De plus, l'invention a également pour but de proposer une passerelle de téléchargement/télédéchargement d'informations apte à être utilisée dans une telle installation, ainsi qu'un procédé de téléchargement/télédéchargement d'informations, susceptible d'être mis en oeuvre par cette installation.

Pour ce faire, l'invention a tout d'abord pour objet une installation de téléchargement/télédéchargement d'informations entre au moins un premier équipement embarqué sur un aéronef et des moyens de chargement/déchargement d'informations non-embarqués, au moins un équipement embarqué communiquant par l'intermédiaire d'un bus de communication de premier type A selon un premier protocole P et comprenant au moins une entrée de réception d'un signal de validation de téléchargement/télédéchargement, les moyens de chargement/déchargement d'informations communiquant par l'intermédiaire d'un bus de communication de second type B selon un second protocole Q. Selon l'invention, l'installation comporte une passerelle de téléchargement/télédéchargement d'informations embarquée sur l'aéronef, la passerelle étant apte à être raccordée aux moyens de chargement/déchargement par l'intermédiaire d'un bus de communication du second type B, et étant raccordée à au moins un premier équipement embarqué communiquant par l'intermédiaire d'un bus de communication du premier type A, la passerelle étant apte à contrôler au moins un signal de validation de chaque équipement embarqué raccordé à la passerelle, et à traduire des informations selon le premier protocole P en informations selon le second protocole Q, et réciproquement.

Avantageusement, l'installation proposée permet d'effectuer des opérations de téléchargement/télédéchargement d'informations entre un terminal de chargement non-embarqué unique disposant d'une seule interface, et des équipements embarqués communiquant par l'intermédiaire de bus de communication de type différent de celui utilisé par le terminal de chargement. Ainsi, la passerelle embarquée sur l'aéronef permet d'aboutir à une installation simple ayant une grande facilité d'accès pour le personnel destiné à l'utiliser, dans la mesure où les opérations à effectuer sont conformes à celles réalisées lors de la présence d'entités communiquant toutes par l'intermédiaire d'un même type de bus de communication.

Selon un mode de réalisation préféré de l'invention, la passerelle de téléchargement/télédéchargement d'informations est également raccordée à au moins un second équipement embarqué communiquant par l'intermédiaire d'un bus de communication du second type B selon le second protocole Q.

Un avantage lié à cette caractéristique spécifique de ce mode de réalisation préféré est de pouvoir télécharger/télédécharger des informations vers et/ou depuis des équipements communiquant par l'intermédiaire de bus de communication distincts, à l'aide d'un terminal de téléchargement unique disposant d'une seule interface.

De plus, on peut prévoir que la passerelle de téléchargement/télédéchargement d'informations est apte à réaliser des fonctions de routage et/ou des fonctions de sécurisation de communications d'informations.

Préférentiellement, chaque bus de communication du premier type A est conforme au standard ARINC 429, et le premier protocole P est conforme à au moins l'un des éléments pris parmi le groupe constitué du standard ARINC 615 et du standard ARINC 615-3.

De même, de façon préférée, chaque bus de communication du second type B est conforme au standard Ethernet, et le second protocole Q est conforme à au moins l'un des éléments pris parmi le groupe constitué du standard ARINC 615A et du standard ARINC 665.

Enfin, chaque bus de communication du second type B peut également être conforme au standard ARINC 629.

L'invention a aussi pour objet une passerelle de téléchargement/télédéchargement d'informations entre au moins un premier équipement embarqué sur un aéronef et des moyens de chargement/déchargement d'informations non-embarqués. Selon l'invention, la passerelle est embarquée sur l'aéronef et apte à être raccordée d'une part à au moins un premier équipement embarqué communiquant par l'intermédiaire d'un bus de communication de premier type A selon un premier protocole P et comprenant au moins une entrée de réception d'un signal de validation de téléchargement/télédéchargement, et d'autre part aux moyens de chargement/déchargement d'informations par l'intermédiaire d'un bus de communication de second type B selon un second protocole Q, la passerelle étant apte à contrôler au moins un signal de validation de téléchargement/télédéchargement de chaque premier équipement embarqué raccordé à la passerelle, et à traduire des informations selon le premier protocole P en informations selon le second protocole Q, et réciproquement.

En outre, l'invention concerne également un procédé de téléchargement/télédéchargement d'informations entre au moins un premier équipement embarqué sur un aéronef et des moyens de chargement/déchargement d'informations non-embarqués, au moins un premier équipement embarqué communiquant par l'intermédiaire d'un bus de communication de premier type A selon un premier protocole P et comprenant au moins une entrée de réception d'un signal de validation de téléchargement/télédéchargement, les moyens de chargement/déchargement d'informations communiquant par l'intermédiaire d'un bus de communication de second type B selon un second protocole Q. Selon l'invention, les informations à télécharger/télédécharger transitent par une passerelle de téléchargement/télédéchargement d'informations embarquée sur l'aéronef, la passerelle contrôlant au moins un signal de validation de chaque premier équipement embarqué communiquant par l'intermédiaire d'un bus de communication du premier type A, et traduisant des informations selon le premier protocole P en informations selon le second protocole Q, et réciproquement.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels :
- la figure 1 représente une vue schématique d'une installation de téléchargement/télédéchargement d'informations, selon un premier mode de réalisation préféré de l'invention,
- la figure 2 représente une vue schématique d'une passerelle de téléchargement/télédéchargement d'informations, mise en oeuvre dans l'installation représentée sur la figure 1, et
- la figure 3 représente une vue schématique d'une installation de téléchargement/télédéchargement d'informations, selon un second mode de réalisation préféré de l'invention.

### EXPOSÉ DÉTAILLÉ DE MODES DE RÉALISATION PRÉFÉRÉS

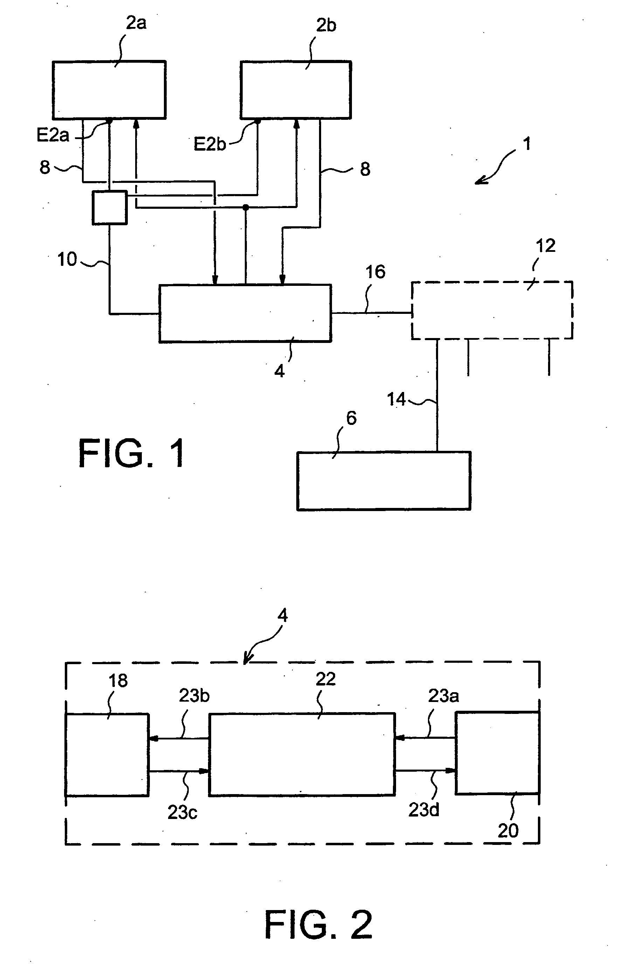

En référence à la figure 1, on a représenté une vue schématique d'une installation 1 de téléchargement/télédéchargement d'informations, selon un premier mode de réalisation préféré de l'invention.

Dans la suite de la description, on entendra par le terme « téléchargement », aussi bien les opérations de téléchargement d'informations du type données ou programmes, que les opérations de télédéchargement de même nature.

L'installation 1 comprend au moins un premier équipement embarqué 2a,2b à bord d'un aéronef (non représenté), une passerelle 4 de téléchargement d'informations également embarquée sur l'aéronef, et des moyens de chargement d'informations 6 non-embarqués, également appelés terminal de chargement. Notons que seuls deux premiers équipements embarqués 2a,2b sont représentés sur la figure 1, mais que l'installation 1 pourrait naturellement en comporter davantage.

Dans ce mode de réalisation préféré de l'invention, les premiers équipements embarqués 2a,2b sont tous conçus pour communiquer par l'intermédiaire d'un bus de communication au standard ARINC 429, et selon un protocole conforme au standard ARINC 615 et/ou ARINC 615-3 et/ou toute autre version du standard ARINC 615. De plus, les premiers équipements 2a,2b comportent chacun au moins une entrée, respectivement E2a et E2b, apte à recevoir un signal de validation de téléchargement, ce signal étant activé pendant toute la durée d'une opération de téléchargement d'informations.

Chaque premier équipement 2a,2b est raccordé à la passerelle 4, au moyen d'un bus de communication 8 conforme au standard ARINC 429. Ce type de bus met en oeuvre des liaisons du type unidirectionnelles, d'un élément émetteur, vers un ou plusieurs éléments récepteurs.

De plus, pour rendre possible un téléchargement de données vers un premier équipement embarqué 2a,2b, la passerelle 4 est également raccordée aux entrées E2a,E2b de signaux de validation des premiers équipements 2a,2b, au moyen de câbles 10.

En revanche, le terminal de chargement 6 est apte à communiquer par l'intermédiaire d'un bus de communication au standard Ethernet également appelé standard ARINC 664, et selon un protocole conforme au standard ARINC 615A et/ou ARINC 665. Le terminal de chargement 6 est donc raccordé à des moyens 12 tel qu'un commutateur (traduit de l'anglais « switch ») habituellement utilisé dans les réseaux Ethernet, ou encore d'un concentrateur (traduit de l'anglais « hub »), au moyen d'un bus de communication 14 conforme au standard Ethernet.

De la même manière, la passerelle de téléchargement 4 est également connectée aux moyens 12 par l'intermédiaire d'un bus de communication 16, conforme au standard Ethernet.

En référence à la figure 2, on a représenté une vue schématique de la passerelle de téléchargement 4, utilisée dans ce mode de réalisation préféré de l'invention, et susceptible de piloter au moins un signal de validation de chaque premier équipement embarqué 2a,2b de l'installation 1.

La passerelle 4 comporte des premiers moyens 18 de réception d'informations, ainsi que des seconds moyens 20 de réception d'informations. Les premiers moyens 18 sont aptes à recevoir des informations selon le protocole conforme aux standards ARINC 615 et/ou ARINC 615-3, et sont directement couplés aux bus de communication 8 conformes au standard ARINC 429. Pareillement, les seconds moyens 20 sont aptes à recevoir des informations selon le protocole conforme aux standards ARINC 615A et/ou ARINC 665, et sont directement couplés au bus de communication 16 conforme au standard Ethernet.

De plus, la passerelle de téléchargement 4 dispose de moyens de traduction 22, capables de traduire des informations selon le protocole conforme aux standards ARINC 615 et/ou ARINC 615-3, en informations selon le protocole conforme aux standards ARINC 615A et/ou ARINC 665, et réciproquement. Les moyens de traduction 22 sont ainsi connectés aux premiers et seconds moyens de réception d'informations 18,20, par l'intermédiaire de liaisons unidirectionnelles 23a, 23b, 23c, 23d.

L'installation 1 est apte à fonctionner de la manière suivante.

Lorsque l'aéronef est en escale et que certains de ses premiers équipements embarqués 2a,2b sont amenés à subir un téléchargement de données, on raccorde tout d'abord la passerelle de téléchargement embarquée 4 au terminal de chargement 6 non-embarqué, comme cela a été décrit ci-dessus.

Dans le cas où l'on effectue un téléchargement de données du terminal de chargement 6 vers un ou plusieurs premiers équipements embarqués 2a,2b sur l'aéronef, les informations émanant du terminal 6 circulent dans le bus de communication 14, dans les moyens 12 du type commutateur, puis arrivent dans les seconds moyens 20 de réception d'informations de la passerelle 4, par l'intermédiaire du bus de communication 16.

En empruntant la liaison 23a, les informations circulant selon le protocole conforme aux standards ARINC 615A et/ou ARINC 665 entrent dans les moyens de traduction 22 où elles sont traduites en informations selon le protocole conforme aux standards ARINC 615 et/ou ARINC 615-3. En circulant à travers la liaison 23b, les informations atteignent les premiers moyens 18 de réception d'informations, avant de transiter par les bus de communication 8 pour délivrer ces informations aux différents premiers équipements embarqués 2a,2b concernés.

De la même manière, dans le cas où l'on effectue un télédéchargement de données d'un premier équipement embarqué 2a,2b sur l'aéronef vers le terminal de chargement 6, les informations émanant des premiers équipement 2a,2b circulent dans les bus de communication 8, puis arrivent dans les premiers moyens 18 de réception d'informations de la passerelle 4.

En empruntant la liaison 23c, les informations circulant selon le protocole conforme aux standards ARINC 615 et/ou ARINC 615-3, entrent dans les moyens de traduction 22 où elles sont traduites en informations selon le protocole conforme aux standards ARINC 615A et/ou ARINC 665. En circulant à travers la liaison 23d, les informations atteignent les seconds moyens 20 de réception d'informations, avant de transiter par les bus de communication 14 et 16 et les moyens 12 du type commutateur, pour délivrer ces informations au terminal de chargement 6 de l'installation 1.

Bien entendu, comme il a été mentionné précédemment, notons que les téléchargements et télédéchargements effectués sont rendus possibles par la passerelle de téléchargement 4, qui, outre sa fonction de traduction des informations, est également apte à piloter les signaux de validation des différents premiers équipements 2a,2b.

La passerelle de téléchargement 4, et plus particulièrement les moyens de traduction 22, sont susceptibles de remplir une pluralité de fonctions.

Parmi ces fonctions, on compte tout d'abord celle relative à la possibilité de constituer des fichiers de configuration propres à chaque premier équipement embarqué 2a,2b, raccordé à la passerelle de téléchargement 4.

De plus, la passerelle 4 est apte à répondre à des requêtes d'identification (du type requête SNIP de l'anglais « Simple Network Identification Protocol ») formulées selon un protocole conforme aux standards ARINC 615A et/ou ARINC 665, ces requêtes s'adressant aux premiers équipements embarqués 2a,2b qui sont raccordés à la passerelle 4 par l'intermédiaire de bus de communication conformes au standard ARINC 429. Notons qu'à la suite de ce type de requête d'identification, une réponse est communiquée soit directement par les premiers équipements embarqués 2a,2b, soit à partir d'informations préalablement enregistrées dans la passerelle de téléchargement 4.

En outre, la passerelle 4 permet également l'émulation d'une opération visant à transmettre des informations, formulée selon un protocole conforme aux standards ARINC 615A et/ou ARINC 665, ces requêtes s'adressant aux premiers équipements embarqués 2a,2b qui sont raccordés à la passerelle 4 par l'intermédiaire de bus de communication conformes au standard ARINC 429. Notons que la réponse attendue est communiquée soit directement par les équipements embarqués 2a,2b, soit à partir d'informations préalablement enregistrées dans la passerelle de téléchargement 4.

En termes de fonctions que peut remplir la passerelle de téléchargement 4, on peut également noter la possibilité de transmettre au terminal de chargement 6, des informations concernant l'état de l'opération de téléchargement en cours. De plus, pour certaines informations nécessitant un affichage, émises depuis un premier équipement embarqué 2a,2b communiquant par l'intermédiaire d'un bus de communication conforme au standard ARINC 429, la passerelle 4 peut effectuer une traduction de ces informations pour qu'elles soient susceptibles de s'afficher sur une interface homme/machine du terminal de chargement 6. La passerelle de chargement 4 est également capable de réaliser une opération d'abandon (traduit de l'anglais « abort ») du téléchargement en cours, la commande de cette opération d'abandon émanant du terminal de chargement 6, pour un téléchargement concernant un premier équipement embarqué 2a,2b communiquant à l'aide d'un bus de communication du type ARINC 429.

Afin de notamment remplir l'ensemble des fonctions susmentionnées, notons que la passerelle de chargement 4 est elle-même téléchargeable, par exemple au moyen du terminal de chargement 6. Ainsi, suite à ce type de téléchargement, les informations reçues par la passerelle de chargement 4 lui sont exclusivement destinées, dans la mesure où elles ne sont en aucun cas redirigées vers d'autres entités et ont pour principal objectif de permettre le bon fonctionnement de cette passerelle 4. Les informations téléchargées en direction de la passerelle de chargement 4 peuvent en outre autoriser des modifications de son comportement, et sont de tout type telles que des informations relatives aux protocoles utilisés, aux programmes exécutables, ou encore aux tables de configuration.

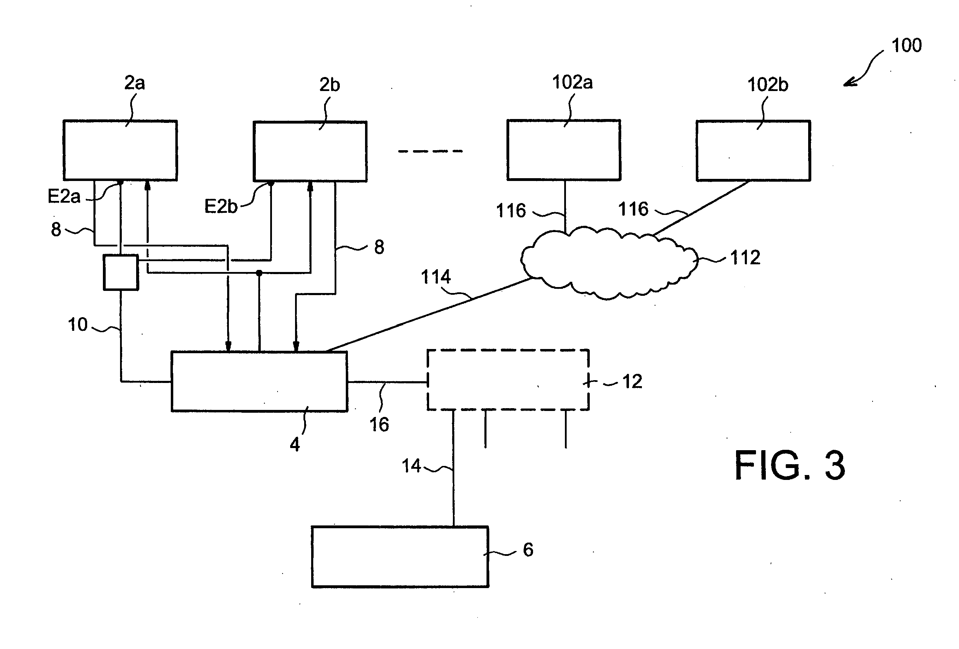

En référence à la figure 3, on voit une installation 100 de téléchargement d'informations selon un second mode de réalisation préféré de l'invention.

L'installation 100 comprend au moins un premier équipement embarqué 2a,2b à bord d'un aéronef (non représenté), une passerelle 4 de téléchargement d'informations également embarquée sur l'aéronef, et des moyens de chargement d'informations 6 non-embarqués, également appelés terminal de chargement. Notons que seuls deux premiers équipements embarqués 2a,2b sont représentés sur la figure 3, mais que l'installation 100 pourrait naturellement en comporter davantage.

Les bus de communication utilisés pour raccorder ces différents éléments entre eux sont exactement ceux utilisés dans l'installation 1 du premier mode de réalisation préféré de l'invention, et ne seront donc pas davantage décrits. De même, le fonctionnement de l'installation 100 étant identique au fonctionnement de l'installation 1 pour ce qui concerne les éléments communs à ces deux modes de réalisation, il ne sera donc pas non plus davantage décrit.

En revanche, dans le second mode de réalisation préféré, l'installation 100 comporte des seconds équipements embarqués 102a,102b, de fonction similaire aux premiers équipements embarqués 2a,2b, à la différence qu'ils sont aptes à communiquer par l'intermédiaire d'un bus de communication conforme au standard Ethernet et selon un protocole conforme aux standards ARINC 615A et/ou ARINC 665, au même titre que le terminal de chargement 6.

Les seconds équipements embarqués 102a,102b sont raccordés à la passerelle de téléchargement 4 par l'intermédiaire de bus de communication 114,116, établissant des liaisons avec un réseau 112 pouvant comporter une pluralité de moyens du type concentrateur.

Ainsi, les informations émanant du terminal de chargement 6 selon le protocole ARINC 615A et/ou ARINC 665 en direction des seconds équipements embarqués 102a,102b n'ont pas besoin de transiter par les moyens de traduction 22 de la passerelle 4, et sont directement redirigées vers le bus de communication 114 du type Ethernet. Dans ce cas, un seul terminal de chargement 6 est alors suffisant pour télécharger des informations vers des premiers équipements embarqués 2a,2b, et des seconds équipements embarqués 102a,102b, fonctionnant respectivement au standard ARINC 429 et au standard Ethernet.

Outre les fonctions déjà spécifiées ci-dessus relatives à la passerelle de téléchargement 4, cette dernière peut également permettre, dans les deux modes de réalisation préférés décrits, de réaliser des fonctions diverses. Parmi elles, ont peut citer des fonctions de routage, par exemple du type routage IP (de l'anglais « Internet Protocol »), ou encore des fonctions de sécurisation de communication d'informations, consistant par exemple à contrôler les adresses des équipements, des calculateurs et des terminaux autorisés à communiquer avec les différents équipements à télécharger.

Il est de plus à noter que dans les modes de réalisation préférés décrits, les premiers équipements embarqués 2a,2b communiquent au moyen de bus de communication du type ARINC 429, et que les seconds équipements embarqués 102a,102b ainsi que le terminal de chargement 6 communiquent au moyen de bus de communication du type Ethernet. Cependant, l'invention concerne également les installations dont les éléments mis en oeuvre peuvent fonctionner selon d'autres standards que ceux expressément cités. A titre d'exemple, les seconds équipements embarqués 102a,102b et le terminal de chargement 6 pourraient être conçus pour communiquer au moyen de bus de communication selon le standard ARINC 629.

Enfin, on peut également prévoir que la passerelle de téléchargement 4 dispose d'une entrée pour être raccordée à un terminal de chargement communiquant selon un bus de communication conforme au standard ARINC 429, ou encore que cette passerelle 4 soit facilement extractible pour permettre un raccordement aisé et direct entre les premiers équipements embarqués 2a,2b, et un tel terminal de chargement.

Bien entendu, diverses modifications peuvent être apportées par l'homme du métier aux installations 1 et 100 qui viennent d'être décrites, uniquement à titre d'exemples non limitatifs.

## Revendications

1. Installation (1,100) de téléchargement/télédéchargement d'informations entre au moins un premier équipement embarqué (2a,2b) sur un aéronef et des moyens de chargement/déchargement d'informations (6) non-embarqués, au moins un premier équipement embarqué (2a,2b) communiquant par l'intermédiaire d'un bus de communication (8) de premier type A selon un premier protocole P et comprenant au moins une entrée (E2a,E2b) de réception d'un signal de validation de téléchargement/télédéchargement, les moyens de chargement/déchargement d'informations (6) communiquant par l'intermédiaire d'un bus de communication (14) de second type B selon un second protocole Q, **caractérisée en ce qu'**elle comporte une passerelle de téléchargement/ télédéchargement d'informations (4) embarquée sur l'aéronef, ladite passerelle (4) étant apte à être raccordée aux moyens de chargement/déchargement (6) par l'intermédiaire d'un bus de communication (16) du second type B, et étant raccordée à au moins un premier équipement embarqué (2a,2b) communiquant par l'intermédiaire d'un bus de communication (8) du premier type A, ladite passerelle (4) étant apte à contrôler au moins un signal de validation de chaque premier équipement embarqué (2a,2b) raccordé à ladite passerelle (4), et à traduire des informations selon ledit premier protocole P en informations selon ledit second protocole Q, et réciproquement.

2. Installation (100) selon la revendication 1, **caractérisée en ce que** la passerelle de téléchargement/télédéchargement d'informations (4) est également raccordée à au moins un second équipement embarqué (102a,102b) communiquant par l'intermédiaire d'un bus de communication (116) du second type B selon ledit second protocole Q, par l'intermédiaire d'un bus de communication (114) du second type B selon ledit second protocole Q.

3. Installation (1,100) selon la revendication 1 ou la revendication 2, **caractérisée en ce que** la passerelle de téléchargement/télédéchargement d'informations (4) est apte à réaliser des fonctions de routage.

4. Installation (1,100) selon l'une quelconque des revendications précédentes, **caractérisée en ce que** la passerelle de téléchargement/télédéchargement d'informations (4) est apte à réaliser des fonctions de sécurisation de communication d'informations.

5. Installation (1,100) selon l'une quelconque des revendications précédentes, **caractérisée en ce que** la passerelle de téléchargement/télédéchargement d'informations (4) est apte à recevoir par téléchargement des informations lui étant exclusivement destinées.

6. Installation (1,100) selon l'une quelconque des revendications précédentes, **caractérisée en ce que** chaque bus de communication (8) du premier type A est conforme au standard ARINC 429, et **en ce que** ledit premier protocole P est conforme à au moins l'un des éléments pris parmi le groupe constitué du standard ARINC 615 et du standard ARINC 615-3.

7. Installation (1,100) selon l'une quelconque des revendications précédentes, **caractérisée en ce que** chaque bus de communication (14,16,114,116) du second type B est conforme au standard Ethernet, et **en ce que** ledit second protocole Q est conforme à au moins l'un des éléments pris parmi le groupe constitué du standard ARINC 615A et du standard ARINC 665.

8. Installation (1,100) selon l'une quelconque des revendications 1 à 6, **caractérisée en ce que** chaque bus de communication (14,16,114,116) du second type B est conforme au standard ARINC 629.

9. Passerelle de téléchargement/télédéchargement d'informations (4) entre au moins un équipement embarqué (2a,2b) sur un aéronef et des moyens de chargement/déchargement d'informations non-embarqués (6), **caractérisée en ce qu'**elle est embarquée sur l'aéronef et apte à être raccordée d'une part à au moins un premier équipement embarqué (2a,2b) communiquant par l'intermédiaire d'un bus de communication (8) de premier type A selon un premier protocole P et comprenant au moins une entrée (E2a,E2b) de réception d'un signal de validation de téléchargement/télédéchargement, et d'autre part aux moyens de chargement/déchargement d'informations (6) par l'intermédiaire d'un bus de communication (16) de second type B selon un second protocole Q, ladite passerelle (4) étant apte à contrôler au moins un signal de validation de téléchargement/télédéchargement de chaque premier équipement embarqué (2a,2b) raccordé à ladite passerelle (4), et à traduire des informations selon ledit premier protocole P en informations selon ledit second protocole Q, et réciproquement.

10. Passerelle (4) selon la revendication 9, **caractérisée en ce qu'**elle est également apte à être raccordée à au moins un second équipement embarqué (102a,102b) communiquant par l'intermédiaire d'un bus de communication (116) du second type B selon ledit second protocole Q, par l'intermédiaire d'un bus de communication (114) du second type B selon ledit second protocole Q.

11. Passerelle (4) selon la revendication 9 ou la revendication 10, **caractérisée en ce qu'**elle est apte à réaliser des fonctions de routage.

12. Passerelle (4) selon l'une quelconque des revendications 9 à 11, **caractérisée en ce qu'**elle est apte à réaliser des fonctions de sécurisation de communication d'informations.

13. Passerelle (4) selon l'une quelconque des revendications 9 à 12, **caractérisée en ce qu'**elle est apte à recevoir par téléchargement des informations lui étant exclusivement destinées.

14. Passerelle (4) selon l'une quelconque des revendications 9 à 13, **caractérisée en ce que** chaque bus de communication (8) du premier type A est conforme au standard ARINC 429, et **en ce que** ledit premier protocole P est conforme à au moins l'un des éléments pris parmi le groupe constitué du standard ARINC 615 et du standard ARINC 615-3.

15. Passerelle (4) selon l'une quelconque des revendications 9 à 14, **caractérisée en ce que** chaque bus de communication (16,114,116) du second type B est conforme au standard Ethernet, et **en ce que** ledit second protocole Q est conforme à au moins l'un des éléments pris parmi le groupe constitué du standard ARINC 615A et du standard ARINC 665.

16. Passerelle (4) selon l'une quelconque des revendications 9 à 14, **caractérisée en ce que** chaque bus de communication (16,114,116) du second type B est conforme au standard ARINC 629.

17. Procédé de téléchargement/télédéchargement d'informations entre au moins un premier équipement embarqué (2a,2b) sur un aéronef et des moyens de chargement/déchargement d'informations non-embarqués (6), au moins un premier équipement embarqué (2a,2b) communiquant par l'intermédiaire d'un bus de communication (8) de premier type A selon un premier protocole P et comprenant au moins une entrée (E2a,E2b) de réception d'un signal de validation de téléchargement/télédéchargement, lesdits moyens de chargement/déchargement d'informations (6) communiquant par l'intermédiaire d'un bus de communication (14) de second type B selon un second protocole Q, **caractérisé en ce que** les informations à télécharger/télédécharger transitent par une passerelle de téléchargement/télédéchargement d'informations (4) embarquée sur l'aéronef, ladite passerelle (4) contrôlant au moins un signal de validation de chaque premier équipement embarqué (2a,2b) communiquant par l'intermédiaire d'un bus de communication (8) du premier type A, et traduisant des informations selon ledit premier protocole P en informations selon ledit second protocole Q, et réciproquement.

18. Procédé selon la revendication 17, **caractérisé en ce que** des informations transitent également au travers de ladite passerelle de téléchargement/télédéchargement d'informations (4), entre au moins un second équipement embarqué (102a,102b) communiquant par l'intermédiaire d'un bus de communication (116) du second type B selon ledit second protocole Q, et les moyens de chargement/déchargement d'informations (6).

19. Procédé selon la revendication 17 ou la revendication 18, **caractérisé en ce que** la passerelle de téléchargement/télédéchargement d'informations (4) réalise des fonctions de routage.

20. Procédé selon l'une quelconque des revendications 17 à 19, **caractérisé en ce que** la passerelle de téléchargement/télédéchargement d'informations (4) réalise des fonctions de sécurisation de communication d'informations.

21. Procédé selon l'une quelconque des revendications 17 à 20, **caractérisé en ce que** la passerelle de téléchargement/télédéchargement d'informations (4) est apte à subir des opérations de téléchargement d'informations lui étant exclusivement destinées.

22. Procédé selon l'une quelconque des revendications 17 à 21, **caractérisé en ce qu'**on utilise un bus de communication au standard ARINC 429 pour chaque bus de communication (8) du premier type A, et **en ce que** ledit premier protocole P est conforme à au moins l'un des éléments pris parmi le groupe constitué du standard ARINC 615 et du standard ARINC 615-3.

23. Procédé selon l'une quelconque des revendications 17 à 22, **caractérisé en ce qu'**on utilise un bus de communication au standard Ethernet pour chaque bus de communication (14,116) du second type B, et **en ce que** ledit second protocole Q est conforme à au moins l'un des éléments pris parmi le groupe constitué du standard ARINC 615A et du standard ARINC 665.

24. Procédé selon l'une quelconque des revendications 17 à 22, **caractérisé en ce qu'**on utilise un bus de communication au standard ARINC 629 pour chaque bus de communication (14,116) du second type B.

## Claims

1. Installation (1, 100) for downloading / uploading information between at least one first equipment (2a, 2b) onboard an aircraft and offboard information loading / unloading means (6), at least one onboard equipment (2a, 2b) communicating through a first type A communication bus (8) according to a first protocol P and comprising at least one reception input (E2a, E2b) for a downloading / uploading validation signal, the information loading / unloading means (6) communicating through a second type B communication bus (14) according to a second protocol Q, **characterized in that** the installation comprises a gateway (4) for downloading / uploading information onboard the aircraft, the said gateway (4) being comnectable to the loading / unloading means (6) through a second type B communication bus (16), and being connected to at least one first onboard equipment (2a, 2b) communicating through a first type A communication bus (8), the said gateway (4) being capable of controlling at least one validation signal for each first onboard equipment (2a, 2b) connected to the said gateway (4), and capable of translating information according to the said first protocol P into information according to the said second protocol Q, and vice versa.

2. Installation (100) according to claim 1, **characterized in that** the information downloading / uploading gateway (4) is also connected to at least one second onboard equipment (102a, 102b) communicating through a second type B communication bus (116) according to the second protocol Q, through a second type B communication bus (114) according to the said second protocol Q.

3. Installation (1, 100) according to claim 1 or 2, **characterized in that** the information downloading / uploading gateway (4) can be used to perform routing functions.

4. Installation (1, 100) according to any one of the previous claims, **characterized in that** the information downloading / uploading gateway (4) can be used to perform security functions for information communications.

5. Installation (1, 100) according to any one of the previous claims, **characterized in that** the information downloading / uploading gateway (4) can be used to download information intended exclusively for it.

6. Installation (1, 100) according to any one of the previous claims, **characterized in that** each first type A communication bus (8) is conform with the ARINC 429 standard, and **in that** the said first protocol P is conform with at least one of the elements among the group composed of the ARINC 615 standard and the ARINC 615-3 standard.

7. Installation (1, 100) according to any one of the previous claims, **characterized in that** each second type B communication bus (14, 16, 114, 116) is conform with the Ethernet standard, and **in that** the said second protocol Q is conform with at least one of the elements among the group composed of the ARINC 615A standard and the ARINC 665 standard.

8. Installation (1, 100) according to any one of claims 1 to 6, **characterized in that** each second type B communication bus (14, 16, 114, 116) is conform with the ARINC 629 standard.

9. Gateway (4) for downloading / uploading information between at least one equipment (2a, 2b) onboard an aircraft, and offboard information loading / unloading means (6), **characterized in that** this gateway is onboard the aircraft and is connectable to firstly at least one first onboard equipment (2a, 2b) communicating through a first type A communication bus (8) according to a first protocol P and comprising at least one reception input (E2a, E2b) for a downloading / uploading validation signal, and secondly to means (6) of loading / unloading information through a second type B communication bus (16) according to a second protocol Q, the said gateway (4) being capable of controlling at least one loading / unloading information validation signal for each first onboard equipment (2a, 2b) connected to the said gateway (4), and capable of translating information according to the said first protocol P into information according to the said second protocol Q, and vice versa.

10. Gateway (4) according to claim 9, **characterized in that** it can also be connected to at least one second onboard equipment (102a, 102b) communicating through a second type B communication bus (116) according to the said second protocol Q, through a second type B communication bus (114) according to the said second protocol Q.

11. Gateway (4) according to claim 9 or 10, **characterized in that** it can perform routing functions.

12. Gateway (4) according to any one of claims 9 to 11, **characterized in that** it can perform security functions for information communications.

13. Gateway (4) according to any one of claims 9 to 12, **characterized in that** it can be used to download information intended exclusively for it.

14. Gateway (4) according to any one of claims 9 to 13, **characterized in that** each first type A communication bus (8) is conform with the ARINC 429 standard, and **in that** the first said protocol P is conform with at least one of the elements among the group composed of the ARINC 615 standard and the ARINC 615-3 standard.

15. Gateway (4) according to any one of claims 9 to 14, **characterized in that** each second type B communication bus (16, 114, 116) is conform with the Ethernet standard and **in that** the second said protocol Q is conform with at least one of the elements among the group composed of the ARINC 615A standard and the ARINC 665 standard.

16. Gateway (4) according to any one of claims 9 to 14, **characterized in that** each communication bus (16, 114, 116) of the second type B is conform with the ARINC 629 standard.

17. Method for downloading / uploading information between at least one equipment (2a, 2b) onboard an aircraft, and offboard information loading / unloading means (6), at least a first onboard equipment (2a, 2b) communicating through a first type A communication bus (8) according to a first protocol P and comprising at least one reception input (E2a, E2b) for a downloading / uploading validation signal, the said information loading / unloading means (6) communicating through a second type B communication bus (14) according to a second protocol Q, **characterized in that** information is downloaded / uploaded using a downloading / uploading gateway (4) onboard the aircraft, the said gateway (4) controlling at least one validation signal for each first onboard equipment (2a, 2b) communicating through a first type A communication bus (8), and translating information according to the said first protocol P into information according to the said second protocol Q, and vice versa.

18. Method according to claim 17, **characterized in that** information passes through the said information downloading / uploading gateway (4), between at least one second onboard equipment (102a, 102b) communicating through a second type B communication bus (116) according to the said second protocol Q, and information loading/downloading means (6).

19. Method according to claim 17 or 18, **characterized in that** the information loading / downloading gateway (4) performs routing functions.

20. Method according to any one of claims 17 to 19, **characterized in that** the information loading / downloading gateway (4) performs security functions for information communications.

21. Method according to any one of claims 17 to 20, **characterized in that** the information loading / downloading gateway (4) can be used to download information intended exclusively for it.

22. Method according to any one of claims 17 to 21, **characterized in that** a communication bus conform with ARINC 429 standard is used for each first type A communication bus, and **in that** the said first protocol P is conform with at least one of the elements among the group composed of the ARINC 615 standard and the ARINC 615-3 standard.

23. Method according to any one of claims 17 to 22, **characterized in that** a communication bus conform with Ethernet standard is used for each second type B communication bus, and **in that** the said second protocol Q is conform with at least one of the elements among the group composed of the ARINC 615A standard and the ARINC 665 standard.

24. Method according to any one of claims 17 to 22, **characterized in that** a communication bus conform with the ARINC 629 standard is used for each second type B communication bus (14, 116).

## Patentansprüche

1. Einrichtung (1,100) zum Uploaden/Downloaden von Informationen zwischen mindestens einer ersten, in einem Luftfahrzeug mitgeführten Vorrichtung (2a,2b) und Mitteln zum Uploaden/Downloaden von nicht-mitgeführten Informationen (6), und mindestens einer ersten mitgeführten Vorrichtung (2a,2b), die über einen Kommunikationsbus (8) vom ersten Typ (A) gemäß einem ersten Protokoll (P) kommuniziert und mindestens einen Eingang (E2a,E2b) zum Empfang eines Upload/Download-Validierungssignals aufweist, wobei die Informations-Upload-/Downloadmittel (6) über einen Kommunikationsbus (14) vom zweiten Typ (B) gemäß einem zweiten Protokoll (Q) kommunizieren,
**dadurch gekennzeichnet, dass** sie ein im Luftfahrzeug mitgeführtes Gateway (4) zum Uploaden/Downloaden von Informationen aufweist, wobei das Gateway (4) mit den Upload-/Downloadmitteln (6) über einen Kommunikationsbus (16) vom zweiten Typ (B) verbunden werden kann und mit mindestens einer über einen Kommunikationsbus (8) vom ersten Typ (A) kommunizierenden, mitgeführten Vorrichtung (2A,2B) verbunden ist, und das Gateway (4) mindestens ein Validierungssignal jeder mit dem Gateway (4) verbundenen ersten mitgeführten Vorrichtung (2a,2b) steuern kann, und Informationen gemäß dem ersten Protokoll (P) in Informationen gemäß dem zweiten Protokoll (Q) und umgekehrt übersetzen kann.

2. Einrichtung (1,100) nach Anspruch 1, **dadurch gekennzeichnet, dass** das Gateway (4) zum Uploaden/Downloaden von Informationen auch mit mindestens einer über einen Kommunikationsbus (116) vom zweiten Typ (B) gemäß dem zweiten Protokoll (Q) kommunizierenden zweiten mitgeführten Vorrichtung (102a,102b) über einen Kommunikationsbus (14) vom zweiten Typ (B) gemäß dem zweiten Protokoll (Q) verbunden ist.

3. Einrichtung (1,100) nach Anspruch 1 oder 2, **dadurch gekennzeichnet, dass** das Gateway (4) zum Uploaden/Downloaden von Informationen Routerfunktionen ausführen kann.

4. Einrichtung (1,100) nach einem der vorangehenden Ansprüche, **dadurch gekennzeichnet, dass** das Gateway (4) zum Uploaden/Downloaden von Informationen Datenübertragungs-Sicherungsfunktionen ausführen kann.

5. Einrichtung (1,100) nach einem der vorangehenden Ansprüche, **dadurch gekennzeichnet, dass** das Gateway (4) zum Uploaden/Downloaden von Informationen durch Uploaden Informationen, die ausschließlich für es bestimmt sind, empfangen kann.

6. Einrichtung (1,100) nach einem der vorangehenden Ansprüche, **dadurch gekennzeichnet, dass** jeder Kommunikationsbus (8) des ersten Typs (A) dem Standard ARINC-429 entspricht, und dass das erste Protokoll (P) mitmindestens einem der Elemente konform ist, die aus der aus dem ARINC 615-Standard und dem ARINC-615-3-Standard gebildeten Gruppe ausgewählt sind.

7. Einrichtung (1,100) nach einem der vorangehenden Ansprüche, **dadurch gekennzeichnet, dass** jeder Kommunikationsbus (14,16,114,116) des zweiten Typs (B) mit dem Ethernet-Standard konform ist, und dass das zweite Protokoll (Q) mit mindestens einem der Elemente konform ist, die aus der aus dem ARINC-615-Standard und dem ARINC-665-Standard gebildeten Gruppe ausgewählt sind.

8. Einrichtung (1,100) nach einem der Ansprüche 1 bis 6, **dadurch gekennzeichnet, dass** jeder Kommunikationsbus (14,16,114,116) vom zweiten Typ (B) mit dem ARINC-629-Standard konform ist.

9. Gateway (4) zum Uploaden/Downloaden von Informationen zwischen mindestens einer in einem Luftfahrzeug mitgeführten Vorrichtung (2a,2b) und nicht-mitgeführten Upload-/Downloadmitteln (6) von Informationen, **dadurch gekennzeichnet, dass** es im Luftfahrzeug mitgeführt wird und einerseits mit mindestens einem Teil einer ersten mitgeführten Vorrichtung (2a,2b) verbunden werden kann, die über einen Kommunikationsbus (8) des ersten Typs (8) gemäß einem ersten Protokoll (P) kommuniziert und mindestens einen Eingang (E2a,E2b) zum Empfang eines Upload/Download-Validierungssignals aufweist, und andererseits mit Mitteln zum Uploaden/Downloaden von Informationen (6) über einen Kommunikationsbus (16) vom zweiten Typ (B) gemäß einem zweiten Protokoll (Q), wobei das Gateway (4) mindestens ein Upload/Download-Validierungssignal jeder mit dem Gateway (4) verbundenen ersten mitgeführten Vorrichtung (2a,2b) steuern kann und Informationen gemäß dem ersten Protokoll (P) in Informationen gemäß dem zweiten Protokoll (Q) und umgekehrt übersetzen kann.

10. Gateway (4) nach Anspruch 9, **dadurch gekennzeichnet, dass** es auch mit mindestens einer über mindestens einen Kommunikationsbus (16) vom zweiten Typ (B) gemäß dem zweiten Protokoll (Q) kommunizierenden zweiten mitgeführten Vorrichtung (102a,102b) über einen Kommunikationsbus (114) vom zweiten Typ (B) gemäß dem zweiten Protokoll (Q) verbunden werden kann.

11. Gateway (4) nach Anspruch 9 oder Anspruch 10, **dadurch gekennzeichnet, dass** es Routerfunktionen ausführen kann.

12. Gateway (4) nach einem der Ansprüche 9 bis 11, **dadurch gekennzeichnet, dass** es Datenübertragungs-Sicherungsfunktionen ausführen kann.

13. Gateway (4) nach einem der Ansprüche 9 bis 12, **dadurch gekennzeichnet, dass** es durch Uploaden Informationen empfangen kann, die ausschließlich für es bestimmt sind.

14. Gateway (4) nach einem der Ansprüche 9 bis 13, **dadurch gekennzeichnet, dass** jeder Kommunikationsbus (8) des ersten Typs (A) mit dem ARINC-429-Standard konform ist, und dass das erste Protokoll (P) mit mindestens einem der Elemente konform ist, die aus der aus dem ARINC-615-Standard und dem ARIN-615-3-Standard gebildeten Gruppe ausgewählt sind.

15. Gateway (4) nach einem der Ansprüche 9 bis 14, **dadurch gekennzeichnet, dass** jeder Kommunikationsbus (16,114,116) vom zweiten Typ (B) mit dem Ethernet-Standard konform ist, und dass das zweite Protokoll (Q) mit mindestens einem der Elemente konform ist, die aus der aus dem ARINC-615A-Standard und dem ARINC-665-Standard gebildeten Gruppe ausgewählt sind.

16. Gateway (4) nach einem der Ansprüche 9 bis 14, **dadurch gekennzeichnet, dass** jeder Kommunikationsbus (16,114,116) des zweiten Typs (B) mit dem ARINC-629-Standard konform ist.

17. Verfahren zum Uploaden/Downloaden von Informationen zwischen mindestens einer in einem Luftfahrzeug mitgeführten ersten Vorrichtung (2a,2b) und Mitteln zum Uploaden/Downloaden von nicht-mitgeführten Informationen (6), und mindestens einer ersten mitgeführten Vorrichtung (2a,2b), die über einen Kommunikationsbus (8) vom ersten Typ (A) gemäß einem ersten Protokoll (P) kommuniziert und mindestens einen Eingang (E2a,E2b) zum Empfang eines Upload/Download-Validierungssignals aufweist, wobei die Informations-Upload-/Downloadmittel (6) über einen Kommunikationsbus (14) vom zweiten Typ (B) gemäß einem zweiten Protokoll (Q) kommunizieren,
**dadurch gekennzeichnet, dass** die Upload-/Download-Informationen über ein Informations-Upload-/Download-Gateway (4), das in einem Luftfahrzeug mitgeführt wird, übertragen werden, wobei das Gateway (4) mindestens ein Validierungssignal jeder über einen Kommunikationsbus (8) des ersten Typs (A) kommunizierenden ersten mitgeführten Vorrichtung (2a,2b) steuert, und Informationen gemäß dem ersten Protokoll (P) in Informationen gemäß dem zweiten Protokoll (Q), und umgekehrt, übersetzt.

18. Verfahren nach Anspruch 17, **dadurch gekennzeichnet, dass** die Informationen auch über das Informations-Upload-/Download-Gateway (4) zwischen mindestens einer zweiten mitgeführten Vorrichtung (102a,102b), die über einen Kommunikationsbus (116) des zweiten Typs (B) gemäß dem zweiten Protokoll (Q) kommuniziert, und den Informations-Upload-/Downloadmitteln (6) übertragen werden.

19. Verfahren nach Anspruch 17 oder 18, **dadurch gekennzeichnet, dass** das Informations-Upload-/Download-Gateway (4) Routerfunktionen ausführt.

20. Verfahren nach einem der Ansprüche 17 bis 19, **dadurch gekennzeichnet, dass** das Informations-Upload-/Download-Gateway (4) Datenübertragungs-Sicherungsfunktionen ausführt.

21. Verfahren nach einem der Ansprüche 17 bis 20, **dadurch gekennzeichnet, dass** das Informations-Upload-/Download-Gateway (4) Uploadvorgänge von Informationen durchführen kann, die ausschließlich für es bestimmt sind.

22. Verfahren nach einem der Ansprüche 17 bis 21, **dadurch gekennzeichnet, dass** ein Kommuninkationsbus mit dem ARINC-429-Standard für jeden Kommunikationsbus (8) des ersten Typs (A) verwendet wird, und das erste Protokoll (P) mit mindestens einem der Elemente konform ist, die aus der aus dem ARINC-615-Standard und dem ARINC-615-3-Standard gebildeten Gruppe ausgewählt werden.

23. Verfahren nach einem der Ansprüche 17 bis 22, **dadurch gekennzeichnet, dass** ein Kommunikationsbus mit Ethernet-Standard für jeden Kommunikationsbus (14,116) des zweiten Typs (B) verwendet wird, und dass das zweite Protokoll (Q) mit mindestens einem der Elemente konform ist, die aus der aus dem ARINC-615A-Standard und dem ARINC-665-Standard gebildeten Gruppe ausgewählt werden.

24. Verfahren nach einem der Ansprüche 17 bis 22, **dadurch gekennzeichnet, dass** ein Kommunikationsbus mit ARINC-629-Standard für jeden Kommunikationsbus (14,116) des zweiten Typs (B) verwendet wird.
